**Europäisches Patentamt**

**European Patent Office**

**Office européen des brevets**

(11) Veröffentlichungsnummer: **0 032 256**
**B1**

(12) **EUROPÄISCHE PATENTSCHRIFT**

(45) Veröffentlichungstag der Patentschrift:
**29.06.83**

(51) Int. Cl.³: **C 09 B 47/067**

(21) Anmeldenummer: **80108270.2**

(22) Anmeldetag: **31.12.80**

(54) Verfahren zur Herstellung von Metallphthalocyaninen.

(30) Priorität: **12.01.80 DE 3001002**

(43) Veröffentlichungstag der Anmeldung:
**22.07.81 Patentblatt 81/29**

(45) Bekanntmachung des Hinweises auf die Patenterteilung:
**29.06.83 Patentblatt 83/26**

(84) Benannte Vertragsstaaten:
**CH DE FR GB LI**

(56) Entgegenhaltungen:
**FR-A-2 321 527**
**GB-A-453 767**
**US-A-2 153 300**
**US-A-2 413 191**
**US-A-2 964 532**
**US-A-3 188 318**

(73) Patentinhaber: **BAYER AG, Zentralbereich Patente, Marken und Lizenzen, D-5090 Leverkusen 1, Bayerwerk (DE)**

(72) Erfinder: **Leister, Heinrich, Dr., Treptower Strasse 8, D-5090 Leverkusen 1 (DE)**
Erfinder: **Falkenberg, Kurt, Dr., Robert-Blum-Strasse 9, D-5000 Köln 41 (DE)**

Verfahren zur Herstellung von Metallphthalocyaninen

Metallphthalocyanine werden grosstechnisch aus Phthalsäureanhydrid unter Zusatz von Harnstoff oder aus Phthalodinitril hergestellt. Beide Verfahren können in Gegenwart von inerten organischen Flüssigkeiten (Lösungsmittelverfahren) oder als Backsynthese durchgeführt werden.

Beim Harnstofflösungsmittelverfahren werden Phthalsäureanhydrid oder dessen Derivaten wie Phthalimid, Phthalamid oder Diammoniumphthalat, mit Harnstoff, einem Metallsalz und einem Katalysator, wie Ammoniummolybdat, in inerten organischen Flüssigkeiten, wie Nitrobenzol oder Trichlorbenzol, bei Temperaturen zwischen etwa 170° C und etwa 220° C umgesetzt. Gute Ausbeuten erhält man nur dann, wenn ein ausreichender Überschuss an Harnstoff (mindestens etwa 1,3 Gewichtsteile pro Gewichtsteil Phthalsäureanhydrid) vorhanden ist (Ullmanns Encyclopädie der technischen Chemie, 3. Auflage, 13. Bd. (1962), S. 705).

Die Verwendung grosser Harnstoffmengen ist aber ein wesentlicher Nachteil des Verfahrens, weil während der Reaktion in grossem Umfang Abbauprodukte des Harnstoffs entstehen, von denen die flüchtigen, wie Ammoniak, sublimierende Ammoniumsalze und mitgerissene organische Flüssigkeit, durch nachgeschaltete Wasser- und/ oder Schwefelsäureberieselungen aufgefangen werden müssen. Der hohe Gehalt so entstandener Abwässer an Ammoniumionen und organischen Flüssigkeiten macht deren Entsorgung sehr aufwendig.

Die festen Abbauprodukte des Harnstoffs, wie Biuret und insbesondere Cyanursäure, müssen durch Behandlung des von der organischen Flüssigkeit befreiten Reaktionsgemisches mit verdünnter Säure oder verdünnter Lauge entfernt werden, wodurch weiteres, umständlich aufzuarbeitendes Abwasser entsteht.

Beim lösungsmittelfreien Harnstoffverfahren — der Backsynthese — entfällt zwar die Entfernung und Wiedergewinnung der organischen Flüssigkeit, es bleiben aber die Abgasprobleme bei der Synthese und als zusätzliche Operation die saure oder alkalische Auskochung des etwa 60- bis 70%igen Backgutes zu einem Rohphthalocyanin und die Aufarbeitung des dabei entstehenden Abwassers.

Verfahren zur Herstellung von Metallphthalocyaninen unter Verwendung von Phthalsäureanhydrid oder dessen Derivaten und Harnstoff als Ausgangsmaterialien erfordern einen hohen Aufwand an Entsorgung, weil etwa zwei Drittel der Masse der Einsatzstoffe Nebenprodukte ergeben und nur etwa ein Drittel in Metallphthalocyanine übergehen.

Das Phthalodinitrilverfahren besteht darin, Phthalodinitril mit Metallsalzen oder Metallpulver umzusetzen.

Die Umsetzung von Phthalodinitril mit Metallsalzen ist immer mit Nebenreaktionen verbunden. So entsteht beispielsweise bei der Reaktion von Phthalodinitril mit Kupfer(I)chlorid oder Kupfer(II)chlorid anchloriertes Kupferphthalocyanin. Beispiele für solche Umsetzungen finden sich zahlreich in der Literatur (siehe z.B. DE-A Nrn. 2255117 und 2256170).

Die Anchlorierung lässt sich verhindern, wenn Stoffe zugegen sind, die das Chlor abfangen, wie Harnstoff (DE-B Nr. 1644679, FR-A Nr. 2014162), zersetzliche Ammoniumsalze (DE-A Nr. 2429259) oder Polyalkohole.

Diese Stoffe müssen jedoch nach Ende der Umsetzung abgetrennt werden, beispielsweise durch Filtration, Destillation oder Auskochung des Reaktionsgemisches, wodurch zusätzliche Aufwendungen an Apparaten, Energie und Arbeitszeit notwendig werden.

Die Umsetzung von Phthalodinitril mit Metallpulver beginnt bei etwa 190-200° C, verläuft aber dann sehr stark exotherm, so dass die dabei auftretenden überhöhten Temperaturen zu Zersetzungsreaktionen und damit zu deutlich verminderten Ausbeuten führen.

Zur Abführung der Reaktionswärme ist vorgeschlagen worden, die Umsetzung in einer inerten organischen Flüssigkeit [(GB-A Nr. 508583; „J. Am. Chem. Soc.", 74, 2807 (1952)] oder in Gegenwart von Salzen (DE-C Nr. 658019; US-A Nr. 2964532) durchzuführen. Nachteilig ist, dass diese Zusatzstoffe nach Ende der Reaktion durch zusätzliche Arbeitsgänge abgetrennt werden müssen.

Bei der Arbeitsweise gemäss der US-A Nr. 2153300 wird ein grosser Teil Metallphthalocyanin in Abwesenheit vom vorgefertigten Metallphthalocyanin hergestellt. Das erhaltene Produkt ist von geringer Qualität und muss durch spezielle Reinigungsoperationen, wie Auflösen in konzentrierter Schwefelsäure und Wiederausfällen in heissem Wasser, verbessert werden. Ausserdem muss die Prozessführung durch genaue Temperaturkontrolle und chargenweise Zugabe von Phthalonitril in aufwendiger Weise überwacht werden. Offenbar erfordert die Arbeitsweise auch ein spezielles Reaktionsgefäss.

Es muss als überraschend und im hohen Masse technisch wünschenswert bezeichnet werden, dass es mit Hilfe des erfindungsgemässen Verfahrens gelingt, Metallphthalocyanine weitgehend ohne Zusatz von anschliessend abzutrennenden Zuschlagstoffen in konventionellen Apparaten in hoher Ausbeute und gleichzeitig in hoher, d.h. für alle Weiterverarbeitungen ausreichender, Reinheit herzustellen.

Das neue Verfahren zur Herstellung von Metallphthalocyaninen nach dem Backverfahren durch Erhitzen von gegebenenfalls substituierten Phthalodinitril mit Metallpulver ist dadurch gekennzeichnet, dass man 3,8 bis 4,4 mol gegebenenfalls substituiertes Phthalodinitril mit 1 mol Metallpulver in Gegenwart von mindestens 1 Gewichtsteil des herzustellenden Metallphthalocyanins pro Gewichtsteil gegebenenfalls substituiertes Phthalodinitril, wobei die gesamte Menge an zugesetztem Metallphthalocyanin bereits zu Beginn der Umsetzung vorhanden ist, bei Temperaturen zwischen 150 und 300° C erhitzt.

Als Ausgangsstoffe können ausser Phthalodinitril auch dessen Derivate verwendet werden, beispielsweise 4-Methoxyphthalodinitril, 3,4-Dicyandiphenyl, 4-Methylphthalodinitril, 4-tert.-Butylphthalodinitril sowie chlor- und bromsubstituierte Phthalodinitrile, wobei man die entsprechenden substituierten Metallphthalocyanine erhalten kann.

Als Metallpulver kommen vorzugsweise Kupfer-, Cobalt- und Nickelpulver in Frage. Darüber hinaus können selbstverständlich auch andere Metallpulver, wie z.B. Eisenpulver, zum Einsatz kommen.

Als Metallphthalocyanine, welche dem Phthalodinitril/Metallpulver-Gemisch von Anfang an zugesetzt werden, finden demzufolge entsprechend vorzugsweise Kupfer-, Cobalt- oder Nickelphthalocyanin Verwendung. Man verwendet mindestens 1 Gewichtsteil Metallphthalocyanin pro Gewichtsteil Phthalodinitril, vorzugsweise etwa 2 bis etwa 4 Gewichtsteile. Alle Ausgangsstoffe sollten gut trocken sein, um Verseifung des Phthalodinitrils zu vermeiden.

Die Einsatzmaterialien sollten vor der Umsetzung gut durchmischt sein. Die Durchmischung kann im eigentlichen Reaktor oder in einem vorgeschalteten Mischer erfolgen. Während der Reaktion ist Bewegung des Reaktionsgemisches von Vorteil. Geeignete Apparate zur Durchführung des erfindungsgemässen Verfahrens sind daher Reaktoren mit rotierenden Wellen und Schaufeln oder Schwingmühlen, die zur Vermeidung von Agglomeraten und Einschlüssen von Phthalodinitril bzw. Metallpulver zweckmässig mit Stahlstangen oder -kugeln versehen sein sollten.

Es hat sich ferner als vorteilhaft erwiesen, die Umsetzung bei weitgehender Abwesenheit von Sauerstoff durchzuführen. Daher kann das Reaktionsgemisch bereits während des Anheizens mit einem schwachen Inertgasstrom, vorzugsweise Stickstoffstrom, beaufschlagt werden.

Die Beheizung des Reaktors erfolgt zweckmässig mit einem beheizten Wärmeträgeröl, um Gleichmässigkeit zu gewährleisten. Im Temperaturbereich zwischen etwa 180 und 200° C beginnt die Umsetzung, wobei ein allmählicher Temperaturanstieg erfolgt, dessen Ausmass von der Menge des zugesetzten Metallphthalocyanins abhängt und etwa 20 bis 40° C betragen kann. Wenn der durch die positive Wärmetönung der Reaktion bedingte Temperaturanstieg beendet ist, sind etwa 99% des Phthalodinitrils umgesetzt. Durch kurzes Nachheizen bis auf maximal etwa 270° C kann die Umsetzung vervollständigt werden. Der bevorzugte Temperaturbereich des erfindungsgemässen Verfahrens liegt daher zwischen etwa 180 und etwa 270° C. Nach Abkühlen und Ausrühren liegt das Reaktionsgemisch pulverförmig vor.

Da die während des Temperaturanstiegs erfolgende Umsetzung nach etwa 10-20 min praktisch beendet ist, ist das erfindungsgemässe Verfahren hervorragend zur kontinuierlichen Arbeitsweise geeignet. Geeignete Apparate hierfür sind handelsübliche Conti-Reaktoren, kontinuierlich arbeitende Schwingmühlen, beheizbare Verfahrensschnecken und dergleichen. Ein Teil des entstandenen Metallphthalocyanins kann noch heiss sofort als Zusatz zu neuem Phthalodinitril/Metallpulver-Gemisch wiederverwendet werden. Dadurch und durch Ausnutzung der bei der Reaktion freiwerdenden Energie zum Aufheizen neuen Phthalodinitril/Metallpulver-Gemisches ergibt sich für ein solches kontinuierliches Verfahren eine ausserordentlich günstige Energiebilanz.

Bei dem erfindungsgemässen Verfahren können üblicherweise bei der Herstellung von Metallphthalocyaninen verwendete Katalysatoren, wie beispielsweise Verbindungen der Molybdäns, zugesetzt werden. Zur Verbesserung der Durchmischung und zur Beschleunigung der Umsetzung ist es bisweilen auch vorteilhaft, geringe Mengen inerter Flüssigkeiten oder saurer bzw. basischer Hilfsstoffe zuzugeben. Die Mengen sollten jedoch so bemessen sein und die Siedepunkte so liegen, dass sich diese Verbindungen während der Reaktion abdestillieren lassen. Als Beispiele für inerte Flüssigkeiten seien Nitrobenzol, Trichlorbenzol, mehrwertige Alkohole und deren Äther, als Beispiele für saure Hilfsstoffe aromatische Carbonsäure, wie Benzoesäure, als Beispiele für basische Hilfsstoffe Chinolin und dessen Derivate genannt.

Beim erfindungsgemässen Verfahren entstehen praktisch keine Nebenprodukte. Das in nahezu quantitativer Ausbeute erhältliche Metallphthalocyanin hat eine hohe Reinheit und kann ohne Nachbehandlung als Ausgangsstoff für weitere Umsetzungen, wie Sulfonierungs-, Chlorsulfonierungs- und Halogenierungsreaktionen, sowie für Formierungen aller Art Verwendung finden.

Der glatte und vollständige Verlauf des Backprozesses von Phthalodinitril mit Metallpulvern in Gegenwart der entsprechenden Metallphthalocyanine ist überraschend, da es sich um eine heterogene Reaktion handelt. Selbst bei Anwendung von 6 Gewichtsteilen Metallphthalocyanin pro Gewichtsteil Phthalodinitril erfolgt im angegebenen Temperaturbereich quantitative Umsetzung.

Es ist aus der DE-A Nr. 2637202 und aus den japanischen Patentschriften Nrn. 5001122 und 5044225 bekannt, bei der Herstellung von Kupferphthalocyanin aus Phthalodinitril Kupferphthalocyanine bestimmter Modifikation zuzugeben. Dieses Kupferphthalocyanin wird jedoch in einer Menge von nur maximal 10% des eingesetzten Phthalodinitrils zugesetzt und dient hier als Katalysator oder Kristallformbeeinflusser. Ausserdem werden solche Umsetzungen in organischen Flüssigkeiten durchgeführt, die nach Ende der Reaktion abgetrennt werden müssen.

In den nachfolgenden Beispielen bedeuten die Prozente Gewichtsprozente.

*Beispiel 1:*

In einen 30-l-Reaktor der Fa. List (Diskotherm B 20 Batch) wird ein inniges Gemisch von 2,5 kg Phthalodinitril, 306 g Kupferpulver und 10 kg etwa 92%iges Kupferphthalocyanin eingetragen. Die Welle des Reaktors wird mit 12 tr/min gedreht, die Heizung erfolgt mit einem elektrisch beheizten Wärmeträgeröl. Während des Anheizens und der Reaktion wird ein schwacher Stickstoffstrom über das Gemisch geleitet. Die Umsetzung beginnt bei 190 bis 200° C, wobei ein allmählicher Temperaturstieg auf ca. 220° C erfolgt. Dann zeigt die Aufarbeitung einer Probe, dass das Phthalodinitril fast vollständig umgesetzt ist. Man heizt noch auf 250° C, lässt danach erkalten und rührt aus. Man erhält 12,8 kg 92- bis 93%iges Kupferphthalocyanin. Es kann ohne Nachbehandlung in $SO_3$-haltiger Schwefelsäure sulfoniert, in Chlorsulfonsäure sulfochloriert und in Aluminiumchloridschmelzen halogeniert werden. Ebenso lässt es sich ohne weitere Reinigung in die Pigmentform überführen, beispielsweise durch Salzmahlung, Lösungsmittelperlmahlung oder Salzknetung in die grünstichig blaue β-Modifikation oder durch Schwefelsäureverpastung in die rotstichig blaue α-Modifikation.

*Beispiel 2:*

Verwendet man 2,6 kg Phthalodinitril anstelle der in Beispiel 1 eingesetzten 2,5 kg Phthalodinitril und arbeitet sonst in gleicher Weise, so erhält man in gleicher Ausbeuten 93- bis 94%iges Kupferphthalocyanin.

*Beispiel 3:*

Verwendet man wie in Beispiel 2 2,6 kg Phthalodinitril und darüber hinaus anstelle des 92%igen 98%iges Kupferphthalocyanin, so erhält man bei gleicher Arbeitsweise 12,8 kg 97- bis 98%iges Kupferphthalocyanin.

*Beispiele 4 bis 7:*

In einem rotierenden Kolben, der durch ein Ölbad beheizt wird, werden die in der folgenden Tabelle angegebenen Mengen Phthalodinitril, Kupferpulver und 95%iges Kupferphthalocyanin (CuPc) nach den Angaben des Beispiels 1 zunächst auf 200° C erhitzt und nach Ende der exothermen Reaktion auf die angegebene Endtemperatur gebracht. Die Qualität des erhaltenen Kupferphthalocyanins liegt, wie in der rechten Spalte gezeigt, bei 94 bis 95%.

| Beispiel | Phthalodinitril | Kupferpulver | CuPc | Endtemperatur | Qualität des erhaltenen CuPc |
|---|---|---|---|---|---|
| 4 | 20 g | 2,2 g | 120 g | 240 °C | 95% |
| 5 | 20 g | 2,2 g | 80 g | 210 °C | 94% |
| 6 | 20 g | 2,6 g | 80 g | 280 °C | 94% |
| 7 | 20 g | 2,5 g | 50 g | 260 °C | 94-95% |

*Beispiel 8:*

In einem rotierenden Kolben, der durch ein Ölbad beheizt wird, werden 20 g Phthalodinitril, 80 g 95%iges Kupferphthalocyanin, 1,6 g Kupferpulver und 1,4 g Kupfer(I)chlorid allmählich auf 220° erhitzt. Das erhaltene Kupferphthalocyanin enthält etwa 1% kerngebundenes Chlor.

*Beispiel 9:*

In einem durch ein Ölbad beheizten rotierenden Kolben werden 20 g Phthalodinitril, 2,3 g Cobaltpulver und 80 g 92%iges Cobaltphthalocyanin langsam auf 200° C erhitzt. Dann findet eine exotherme Reaktion statt, bei der die Temperatur allmählich auf 200° C ansteigt. Man erhält 102 g 92%iges Cobaltphthalocyanin.

*Beispiel 10:*

Verwendet man 2,1 g Cobaltpulver anstelle der in Beispiel 9 eingesetzten 2,3 g Cobaltpulver und erhitzt nach Ende der exothermen Reaktion auf 270° C, so erhält man ein 93%iges Cobaltphthalocyanin.

*Beispiel 11:*

Man erhitzt in einem durch ein Ölbad beheizten Rotationskolben 25 g Phthalodinitril, 2,8 g Cobaltpulver, 100 g 92%iges Cobaltphthalocyanin und 3 g Benzoesäure langsam auf 200° C. Wenn die exotherme Reaktion abgeklungen ist, heizt man unter Vakuum weiter auf 270° C, um die eingesetzte Benzoesäure abzudestillieren. Man erhält 127 g 92- bis 93%iges Cobaltphthalocyanin.

*Beispiel 12 (Vergleichsversuch)*

20 g Phthalodinitril, 5 g wasserfreies Cobaltchlorid und 60 g 92%iges Cobaltphthalocyanin werden nach den Angaben des Beispiels 9 auf 220° C erhitzt. Das erhaltenen Cobaltphthalocyanin enthält etwa 3% kerngebundenes Chlor.

*Beispiel 13:*

20 g Phthalodinitril, 2,25 g Nickelpulver und 80 g 92%iges Nickelphthalocyanin werden nach den Angaben des Beispiels 9 auf 220° C erhitzt. Man erhält 102 g etwa 92%iges Nickelphthalocyanin.

*Beispiel 14:*

In einen durch ein Ölbad beheizten rotierenden Kolben wird ein Gemisch von 20 g 92%igem Kupferphthalocyanin, 4 g Phthalodinitril und 0,48 g Kupferpulver unter Stickstoffatmosphäre langsam auf 200° C erhitzt. Wenn die exotherme Reaktion abgeklugen ist, gibt man allmählich weiteres Phthalodinitril/Kupferpulver-Gemisch im gleichen Verhältnis zu, wobei die ersten Portionen nicht grösser als etwa 4 g Phthalodinitril + 0,48 g Kupferpulver sein und die Temperatur des Reaktionsgemisches zwischen etwa 200 und etwa 230° C liegen sollte. Das erhaltene Kupferphthalocyanin ist etwa 92%ig. Da das Kupferphthalocyanin im angegebenen Temperaturbereich laufend entsteht, ist es immer in ausreichendem Überschuss vorhanden. Es kann daher soviel Phthalodinitril/Kupferpulver-Gemisch zugegeben werden, wie es die Grösse des verwendeten Kolbens zulässt.

## Patentansprüche

1. Verfahren zur Herstellung von Metallphthalocyaninen nach dem Backverfahren durch Erhitzen von gegebenenfalls substituiertem Phthalodinitril mit Metallpulver, dadurch gekennzeichnet, dass man 3,8 bis 4,4 mol gegebenenfalls substituiertes Phthalodinitril mit 1 mol Metallpulver in Gegenwart von mindestens 1 Gewichtsteil des entsprechenden Metallphthalocyanins pro Gewichtsteil gegebenenfalls substituiertes Phthalodinitril, wobei die gesamte Menge an zugesetztem Metallphthalocyanin bereits zu Begin der Umsetzung vorhanden ist, bei Temperaturen zwischen 150 und 300° C erhitzt.

2. Verfahren gemäss Anspruch 1 zur Herstellung von Kupfer-, Nickel- und Cobaltphthalocyanin.

3. Verfahren gemäss den Ansprüchen 1 und 2, dadurch gekennzeichnet, dass man pro Gewichtsteil gegebenenfalls substituiertes Phthalodinitril 2 bis 4 Gewichtsteile Metallphthalocyanin in die Reaktion einsetzt.

4. Verfahren gemäss den Ansprüchen 1 bis 3, dadurch gekennzeichnet, dass man den Reaktionsansatz bei Temperaturen zwischen 180 und 270° C erhitzt.

5. Verfahren gemäss den Ansprüchen 1 bis 4, dadurch gekennzeichnet, dass man die Umsetzung in einer Inertgasatmosphäre, vorzugsweise Stickstoffatmosphäre, durchführt.

6. Verfahren gemäss den Ansprüchen 1 bis 5, dadurch gekennzeichnet, dass man die Umsetzung in Gegenwart eines üblicherweise bei der Herstellung von Metallphthalocyaninen verwendeten Katalysators durchführt.

7. Kontinuierliches Verfahren gemäss den Ansprüchen 1 bis 6.

## Claims

1. Process for the preparation of metal phthalocyanines by the baking method, by heating optionally substituted phthalodinitrile with a metal powder, characterised in that 3.8 to 4.4 mol of optionally substituted phthalodinitrile are heated with 1 mol of metal powder in the presence of at least 1 part by weight of the corresponding metal phthalocyanine per part by weight of optionally substituted phthalodinitrile, the total amount of added metal phthalocyanine being already present at the start of the reaction, at temperatures between 150° C and 300° C.

2. Process according to claim 1 for the preparation of copper phthalocyanine, nickel phthalocyanine or cobalt phthalocyanine.

3. Process according to claim 1 and 2, characterised in that 2 to 4 parts by weight of metal phthalocyanine are employed in the reaction per part by weight of optionally substituted phthalodinitrile.

4. Process according to claims 1 to 3, characterised in that the reaction batch is heated at temperatures between 180° C and 270° C.

5. Process according to claims 1 to 4, characterised in that the reaction is carried out in an inert gas atmosphere, preferably in a nitrogen atmosphere.

6. Process according to claims 1 to 5, characterised in that the reaction is carried out in the presence of a catalyst usually employed in the preparation of metal phthalocyanines.

7. Continuous process according to claims 1 to 6.

## Revendications

1. Procédé pour la fabrication de phtalocyanines métalliques selon le procédé par cuisson, par chauffage de phthalodinitrile éventuellement substitué avec de la poudre métallique, caractérisé en ce que l'on chauffe 3,8 à 4,4 mol de phtalodinitrile éventuellement substitué avec 1 mol de poudre métallique à des températures comprises entre 150 et 300° C en présence d'au moins 1 partie en poids de la phtalocyanine métallique correspondante par partie en poids de phtalodinitrile éventuellement substitué, la quantité totale de phtalocyanine métallique ajoutée étant déjà présente au début de la réaction.

2. Procédé selon la revendication 1, pour la préparation de phtalocyanine de cuivre, de phtalocyanine de nickel et de phtalocyanine de cobalt.

3. Procédé selon les revendications 1 et 2, caractérisé en ce que l'on utilise dans la réaction 2 à 4 parties en poids de phtalocyanine métallique par partie en poids de phtalodinitrile éventuellement substitué.

4. Procédé selon les revendications 1 à 3, caractérisé en ce que l'on chauffe le mélange de réaction à des températures comprises entre 180 et 270° C.

5. Procédé selon les revendications 1 à 4, caractérisé en ce que l'on effectue la réaction en atmosphère de gaz inerte, de préférence en atmosphère d'azote.

6. Procédé selon les revendications 1 à 5, caractérisé en ce que l'on effectue la réaction en présence d'un catalyseur habituellement utilisé dans le cas de la fabrication des phtalocyanines métalliques.

7. Procédé continu selon les revendications 1 à 6.